# EUROPEAN PATENT APPLICATION

(11) **EP 4 852 128 A1**
(43) Date of publication of application: **09.12.2026**
(21) Application number: 25809354.1
(22) Date of filing: 29.04.2025
(51) Int. Cl.: H01M 10/0583, H01M 10/0525, H01M 10/052

(54) **STACKING DEVICE, STACKED BATTERY CELL STRUCTURE AND MANUFACTURING METHOD FOR STACKED BATTERY CELL STRUCTURE**

(30) Priority: 08.05.2024 CN 202410565994
(71) Applicant: Hefei Gotion High-Tech Power Energy Co., Ltd., Hefei, Anhui 230012 (CN)
(72) Inventor: GAO, Chong, Hefei, Anhui 230012 (CN); ZHANG, Xu, Hefei, Anhui 230012 (CN); ZHU, Chunlin, Hefei, Anhui 230012 (CN); CHENG, Hui, Hefei, Anhui 230012 (CN)
(74) Representative: Novagraaf Technologies
(86) International application number: PCT/CN2025/092156
(87) International publication number: WO 2025/232655

(57) **Abstract**

The present disclosure provides a stacking device, a stacked battery cell structure and a preparation method of the stacked battery cell structure. The stacking device is used for stacking a composite electrode sheet strip. The stacking device includes a frame; a transfer assembly, rotatably disposed on the frame around a first axis, wherein the transfer assembly has a plurality of adsorption stations, the plurality of adsorption stations are arranged in a circumferential direction of the first axis, and each adsorption station has a vacuum state for adsorbing a composite electrode sheet strip and a vacuum breakdown state for releasing the composite electrode sheet strip; and a stacking assembly, located on a side of the transfer assembly, wherein the stacking assembly includes a mounting member and at least one stacking member, the mounting member is disposed on the frame, the at least one stacking member is configured to be capable of clamping the composite electrode sheet strip, and the at least one stacking member is movably mounted on the mounting member, so that the at least one stacking member is able to get close to or away from the transfer assembly. The technical solution of the present disclosure solves the problem of difficulty in effectively improving the stacking efficiency of stacked battery cells in the prior art.

## Description

The present disclosure claims the priority of Chinese Patent Application 202410565994.5, filed in the China National Intellectual Property Administration on May 08, 2024, and entitled "Stacking Device, Stacked Battery Cell Structure and Preparation Method of Stacked Battery Cell Structure".

### Technical Field

The present disclosure relates to the technical field of lithium ion batteries, and in particular to a stacking device, a stacked battery cell structure and a preparation method of the stacked battery cell structure.

### Background

A traditional manufacturing process of lithium battery stacked cells involves first cutting a positive electrode sheet strip and a negative positive electrode sheet strip to obtain positive electrode sheets and negative positive electrode sheets, then causing a separator to move left and right along with a stacking platform to be folded, and respectively placing the positive electrode sheets and the negative positive electrode sheets on two sides of the folded separator until a specified number of layers of stacking operations are completed. This method has a bottleneck in stacking efficiency.

In order to solve the above problem, a thermal composite stacking process is usually used in the prior art: the positive and negative electrode sheets obtained by cutting are compounded with a continuous separator in a pressurizing and heating manner, and then the continuous separator is cut to obtain composite unit bodies, and finally the composite unit bodies are stacked until a specified number of layers of stacking operations are completed. However, the composite unit bodies in the solution still require frequent transfer and stacking, resulting in the problem of difficulty in effectively improving the stacking efficiency.

### Summary

The main objective of the present disclosure is to provide a stacking device, a stacked battery cell structure and a preparation method of the stacked battery cell structure, so as to solve the problem in the prior art of difficulty in effectively improving the stacking efficiency of stacked battery cells.

To achieve the above objective, an embodiment of the present disclosure provides a stacking device, used for stacking a composite electrode sheet strip, and including: a frame; a transfer assembly, rotatably disposed on the frame around a first axis, wherein the transfer assembly has a plurality of adsorption stations, the plurality of adsorption stations are arranged in a circumferential direction of the first axis, and each of the plurality of adsorption stations has a vacuum state for adsorbing the composite electrode sheet strip and a vacuum breakdown state for releasing the composite electrode sheet strip; and a stacking assembly, located on a side of the transfer assembly, wherein the stacking assembly includes a mounting member and at least one stacking member, the mounting member is disposed on the frame, the at least one stacking member is configured to be capable of clamping the composite electrode sheet strip, and the at least one stacking member is movably mounted on the mounting member, so that the at least one stacking member is able to get close to or away from the transfer assembly.

Further, the at least one stacking member includes a plurality of stacking members, the mounting member is rotatably disposed relative to the frame around a second axis, the plurality of stacking members are arranged at intervals in a circumferential direction of the second axis, and each of the plurality of stacking members is movably disposed in a direction perpendicular to the second axis.

Further, each of the at least one stacking member includes: a stacking platform, movably disposed on the mounting member; and a pressing member, located on a side of the stacking platform away from the mounting member, wherein the pressing member is movably disposed on the stacking platform, and the pressing member has a first position for pressing a part of the composite electrode sheet strip on the stacking platform and a second position away from the stacking platform.

Further, the stacking assembly further includes a driving mechanism, the driving mechanism has a fixed end and a movable end movably disposed relative to the fixed end, the fixed end is connected to the mounting member, and the movable end is connected to the at least one stacking member.

Further, the transfer assembly includes: a rotating member, rotatably disposed on the frame around the first axis; and a plurality of adsorption members, disposed on the rotating member at intervals in the circumferential direction of the first axis, the plurality of adsorption members are arranged in correspondence with the plurality of adsorption stations; wherein an adsorption channel is disposed on each of the plurality of adsorption members, one end of the adsorption channel is configured to communicate with a vacuum gas source, and the other end of the adsorption channel penetrates to a side of a corresponding adsorption member away from the rotating member, so as to form a corresponding adsorption station on the corresponding adsorption member.

Further, the transfer assembly further includes a gas guide slip ring, a rotating component of the gas guide slip ring is connected to the rotating member, a stationary component of the gas guide slip ring is connected to the frame, and adsorption channels on the plurality of adsorption members communicate with the vacuum gas source through the gas guide slip ring.

Further, an avoidance groove is formed in a side of each of the plurality of adsorption members away from the rotating member, and the avoidance groove is used for avoiding a part of each of the at least one stacking member.

Further, the stacking device further includes a cutting member disposed on the mounting member, the cutting member is located on a side of the at least one stacking member, and the cutting member is used for cutting off the composite electrode sheet strip.

According to another aspect of the present disclosure, an embodiment of the present disclosure provides a stacked battery cell structure, formed by continuously folding a composite electrode sheet strip by using the above stacking device, wherein the composite electrode sheet strip includes: a separator; and a plurality of composite units, connected to the separator, wherein the plurality of composite units are disposed at intervals in a length direction of the separator, each of the plurality of composite units include positive electrode sheets and/or negative electrode sheets, one of two adjacent composite units at least includes a negative electrode sheet, and the other of the two adjacent composite units at least includes a positive electrode sheet, and the positive electrode sheet and the negative electrode sheet are respectively located on two sides of the separator.

According to still another aspect of the present disclosure, an embodiment of the present disclosure provides a preparation method of a stacked battery cell structure, in which a composite electrode sheet strip is stacked by using the above stacking device. The preparation method of the stacked battery cell structure includes: adsorbing the composite electrode sheet strip to the transfer assembly by using at least part of the plurality of adsorption stations; and rotating the transfer assembly and causing the at least one stacking member capable of clamping the composite electrode sheet strip to reciprocate, so as to fold the composite electrode sheet strip and to form the stacked battery cell structure.

In the technical solutions of the present disclosure, the adsorption stations are located in the vacuum state, so that the composite electrode sheet strip can be adsorbed on a periphery of the transfer assembly, and the transfer assembly is rotated, so that the adsorption stations carrying the composite electrode sheet strip face the stacking member, thereby realizing the transfer of composite units on the composite electrode sheet strip; the stacking member is then caused to move toward a direction close to the transfer assembly, so that the stacking member can contact the composite electrode sheet strip and clamp and fix the end part of the composite electrode sheet strip, and then the stacking member is caused to carry the composite electrode sheet strip to move toward a direction away from the transfer assembly; the transfer assembly is rotated to drive the composite electrode sheet strip on the adsorption stations to be transferred to a position corresponding to the stacking member through the transfer assembly; and then, the transfer assembly is rotated, and the stacking member is caused to move toward the direction close to the transfer assembly, so that the composite electrode sheet strip corresponding to the stacking member is stacked on the stacking member. In this way, compared with the solution in the prior art in which the stacking platform is first moved to stack the separator and then transfer the positive and negative electrode sheets, or the composite units are first transferred and are then stacked on specified positions, in the present embodiment, the composite units on the composite electrode sheet strip can be transferred and stacked on the stacking member during the process of rotating the transfer assembly. In this way, the stacking efficiency can be improved by performing the steps of transfer and stacking at the same time, thereby solving the problem in the prior art of difficulty in effectively improving the stacking efficiency, and thus shortening the manufacturing period of stacking.

### Brief Description of the Drawings

The drawings, which constitute a part of the present application, are used to provide a further understanding of the present disclosure, and schematic embodiments of the present disclosure and descriptions thereof are used to explain the present disclosure, and do not constitute an improper limitation on the present disclosure. In the drawings:
Fig. 1 illustrates a schematic structural diagram of a stacking process of a stacking device for a stacked battery cell structure according to Embodiment 1 of the present disclosure;
Fig. 2 illustrates a schematic structural diagram of another stacking process of the stacking device for the stacked battery cell structure according to Embodiment 1 of the present disclosure;
Fig. 3 illustrates a schematic structural diagram of another stacking process of the stacking device for the stacked battery cell structure according to Embodiment 1 of the present disclosure;
Fig. 4 illustrates a schematic structural diagram of another stacking process of the stacking device for the stacked battery cell structure according to Embodiment 1 of the present disclosure (motion trajectories of a top end of a composite electrode sheet strip 1 are shown, i.e., C1 and C2);
Fig. 5 illustrates a schematic structural diagram of another stacking process of the stacking device for the stacked battery cell structure according to Embodiment 1 of the present disclosure;
Fig. 6 illustrates a schematic structural diagram of another stacking process of the stacking device for the stacked battery cell structure according to Embodiment 1 of the present disclosure;
Fig. 7 illustrates a schematic structural diagram of another stacking process of the stacking device for the stacked battery cell structure according to Embodiment 1 of the present disclosure;
Fig. 8 illustrates a schematic structural diagram of another stacking process of the stacking device for the stacked battery cell structure according to Embodiment 1 of the present disclosure;
Fig. 9 illustrates a schematic structural diagram of another stacking process of the stacking device for the stacked battery cell structure according to Embodiment 1 of the present disclosure;
Fig. 10 illustrates a schematic structural diagram of a stacked battery cell structure according to Embodiment 1 of the present disclosure;
Fig. 11 illustrates a schematic structural diagram of a composite electrode sheet strip according to Embodiment 1 of the present disclosure;
Fig. 12 illustrates a schematic structural diagram of a stacking process of a stacking device for a stacked battery cell structure according to Embodiment 2 of the present disclosure;
Fig. 13 illustrates a schematic structural diagram of a stacked battery cell structure according to Embodiment 2 of the present disclosure;
Fig. 14 illustrates a schematic structural diagram of a composite electrode sheet strip according to Embodiment 2 of the present disclosure;
Fig. 15 illustrates a schematic structural diagram of a stacking process of a stacking device for a stacked battery cell structure according to Embodiment 3 of the present disclosure;
Fig. 16 illustrates a schematic structural diagram of a stacked battery cell structure according to Embodiment 3 of the present disclosure;
Fig. 17 illustrates a schematic structural diagram of a composite electrode sheet strip according to Embodiment 3 of the present disclosure;
Fig. 18 illustrates a schematic structural diagram of a stacking process of a stacking device for a stacked battery cell structure according to Embodiment 4 of the present disclosure;
Fig. 19 illustrates a schematic structural diagram of a stacked battery cell structure according to Embodiment 4 of the present disclosure; and
Fig. 20 illustrates a schematic structural diagram of a composite electrode sheet strip according to Embodiment 4 of the present disclosure.

The above drawings include the following reference signs:
1, composite electrode sheet strip; 10, positive electrode sheet; 20, negative electrode sheet; 30, separator; 40, transfer assembly; 50, stacking assembly; 401, rotating member; 402, adsorption station; 403, gas guide slip ring; 404, vacuum pipeline; 405, avoidance groove; 501, mounting member; 502, stacking member; 503, driving mechanism; 504, pressing member; 505, cutting member.

### Detailed Description of the Embodiments

It should be noted that, if there is no conflict, embodiments in the present application and features in the embodiments may be combined with each other. Hereinafter, the present disclosure will be described in detail with reference to the drawings and in conjunction with the embodiments.

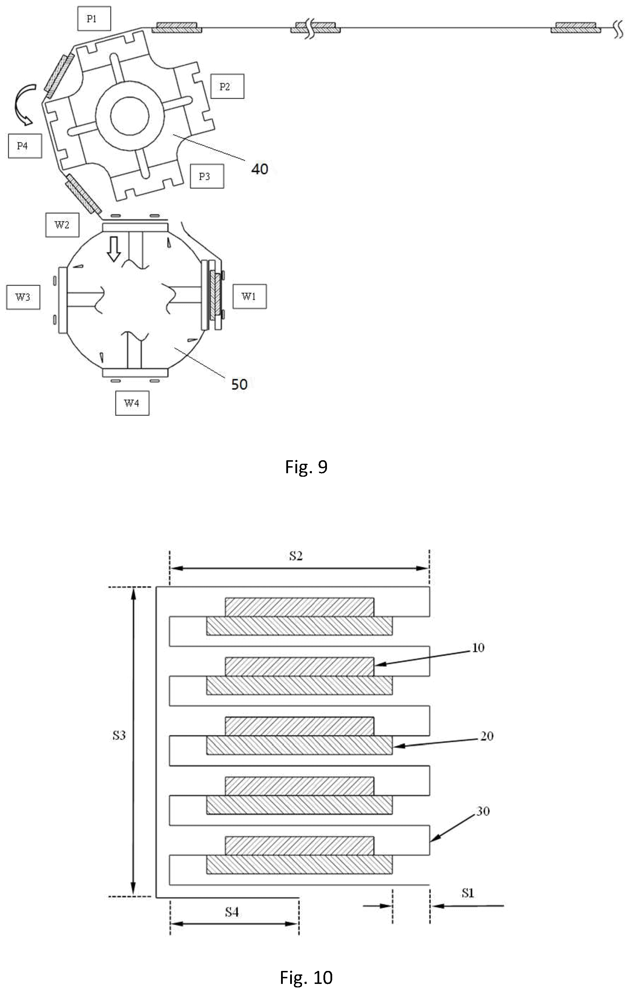

As shown in Fig. 10, Fig. 13, Fig. 16 and Fig. 19, an embodiment of the present disclosure provides a stacked battery cell structure, formed by continuously folding a composite electrode sheet strip 1 by using a stacking device as described below. The composite electrode sheet strip 1 includes: a separator 30; and a plurality of composite units, connected to the separator 30, wherein the plurality of composite units are disposed at intervals in a length direction of the separator 30, each of the composite units includes a positive electrode sheet 10 and/or a negative electrode sheet 20, one of two adjacent composite units at least includes a negative electrode sheet 20, the other of the two adjacent composite units at least includes a positive electrode sheet 10, and the positive electrode sheet 10 and the negative electrode sheet 20 are respectively located on two sides of the separator 30.

In the above technical solution, the positive electrode sheet 10 and the negative electrode sheet 20 in the two adjacent composite units are respectively distributed on the two sides of the separator 30, so as to prevent a direct contact between the positive electrode sheet 10 and the negative electrode sheet 20, thereby preventing the positive electrode sheet and the negative electrode sheet from being short-circuited, thus improving the safety performance.

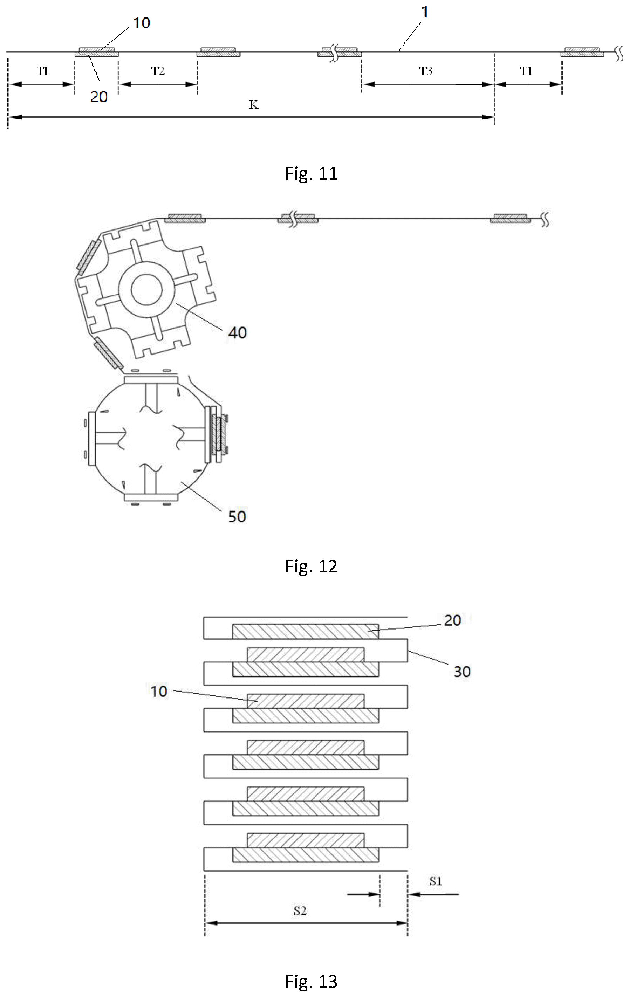

It should be noted that, in the embodiments of the present disclosure, Fig. 11, Fig. 14, Fig. 17 and Fig. 20 all illustrate a plurality of composite electrode sheet strips 1 connected to each other.

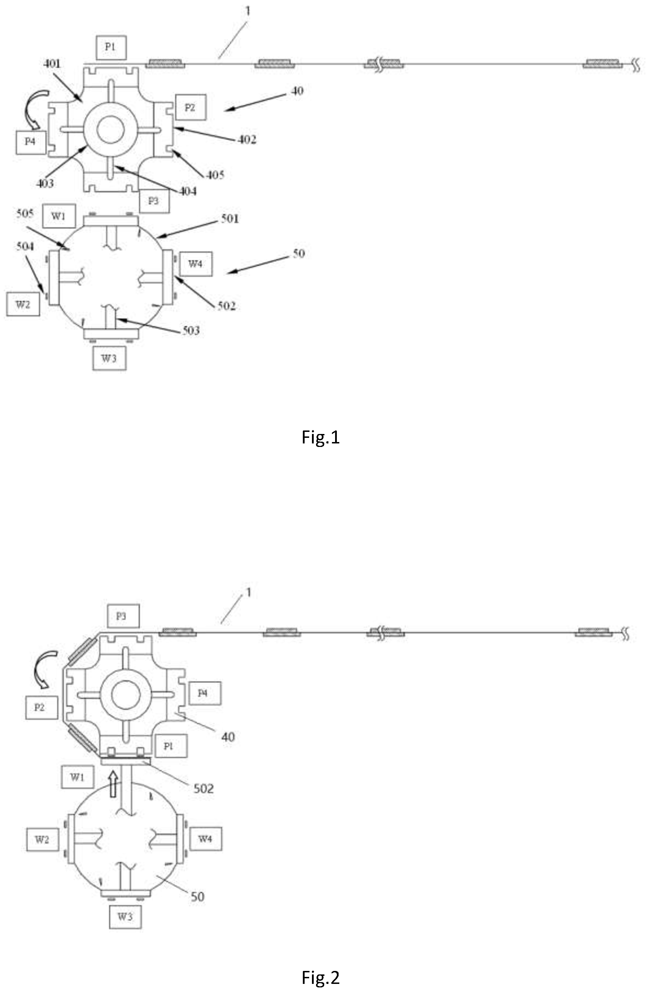

As shown in Fig. 1, an embodiment of the present disclosure provides a stacking device, including: a frame; a transfer assembly 40, rotatably disposed on the frame around a first axis, wherein the transfer assembly 40 has a plurality of adsorption stations 402, the plurality of adsorption stations 402 are arranged in a circumferential direction of the first axis, and each adsorption station 402 has a vacuum state for adsorbing a composite electrode sheet strip 1 and a vacuum breakdown state for releasing the composite electrode sheet strip 1; and a stacking assembly 50, located on a side of the transfer assembly 40, wherein the stacking assembly 50 includes a mounting member 501 and at least one stacking member 502, the mounting member 501 is disposed on the frame, the at least one stacking member 502 is configured to be capable of clamping the composite electrode sheet strip 1, and the at least one stacking member 502 is movably mounted on the mounting member 501, so that the at least one stacking member 502 can get close to or away from the transfer assembly 40.

In the above technical solution, the adsorption stations 402 are located in the vacuum state, so that the composite electrode sheet strip 1 can be adsorbed on a periphery of the transfer assembly 40, and the transfer assembly 40 is rotated, so that the adsorption stations 402 carrying the composite electrode sheet strip 1 face the stacking member 502, thereby realizing the transfer of composite units on the composite electrode sheet strip 1; the stacking member 502 is then caused to move toward a direction close to the transfer assembly 40, so that the stacking member 502 is able to contact the composite electrode sheet strip 1 and clamp and fix the end part of the composite electrode sheet strip 1, and then the stacking member 502 is caused to carry the composite electrode sheet strip 1 to move toward a direction away from the transfer assembly 40; the transfer assembly 40 is rotated to drive the composite electrode sheet strip 1 on the adsorption stations 402 to be transferred to a position corresponding to the stacking member 502 through the transfer assembly 40; and then, the transfer assembly 40 is rotated, and the stacking member 502 is caused to move toward the direction close to the transfer assembly 40, so that the composite electrode sheet strip 1 corresponding to the stacking member 502 is stacked on the stacking member 502. In this way, compared with the solution in the prior art in which a stacking platform is first moved to stack the separator and then transfer the positive and negative electrode sheets, or the composite units are first transferred and are then stacked on specified positions, in the present embodiment, the composite units on the composite electrode sheet strip 1 can be transferred and stacked on the stacking member 502 during the process of rotating the transfer assembly 40. In this way, the stacking efficiency can be improved by performing the steps of transfer and stacking at the same time, thereby solving the problem in the prior art of difficulty in effectively improving the stacking efficiency, and thus shortening the manufacturing period of stacking.

Further, in the embodiments of the present disclosure, on one hand, compared with the prior art in which the positive electrode sheet and the negative electrode sheet are first cut respectively, the separator is folded along with the movement of the stacking platform, and then the positive electrode sheet and the negative electrode sheet are respectively placed on the two sides of the folded separator. In the present embodiment, it is possible to not only avoid respectively cutting the positive electrode sheet 10 and the negative electrode sheet 20, but also avoid respectively transferring the positive electrode sheet and the negative electrode sheet. In this way, the stacking time can be effectively reduced, thereby improving the working efficiency of stacking. On the other hand, compared with the prior art in which the composite electrode sheet 1 is cut to obtain composite unit bodies, and then the composite unit bodies are transferred and stacked. In the present embodiment, the number of times of cutting the composite electrode sheet strip 1 can be reduced, and the transfer assembly 40 can carry a plurality of composite units on the composite electrode sheet strip 1 to move during the process of rotating the transfer assembly 40, so as to transfer the composite units, and one of the plurality of composite units can be stacked on the corresponding stacking member 502, so as to perform the transfer and stacking at the same time, thereby improving the working efficiency of the stacking process, and thus solving the problem in the prior art of difficulty in effectively improving the stacking efficiency.

It should be noted that, in the embodiments of the present disclosure, the vacuum breakdown state corresponds to the vacuum state, and the vacuum breakdown state is that in an environment in which the vacuum state has been established, a gas is added by a certain means to break the original vacuum state.

Specifically, in the embodiments of the present disclosure, the adsorption station 402 is in the vacuum breakdown state, so that the composite electrode sheet strip 1 on the adsorption station 402 can be disengaged from the adsorption station 402. Therefore, the corresponding stacking member 502 can drive the pressed part of the composite electrode sheet strip 1 to be away from the transfer assembly 40, and thus the adsorption station 402 can release a part of the composite electrode sheet strip 1 and stack the same on the stacking member 502 during the process of rotating the transfer assembly 40.

It should be noted that, in the embodiments of the present disclosure, the first axis passes through the center of the transfer assembly 40 to extend in a horizontal direction, and the first axis is perpendicular to a vertical direction in Fig. 1, that is, the first axis is perpendicular to a paper surface of Fig. 1.

It should be noted that, in the embodiments of the present disclosure, the number of the adsorption stations 402 is greater than or equal to two, but the specific number is not limited.

In the embodiments of the present disclosure, the number of the adsorption stations 402 is four, that is, a P1 station, a P2 station, a P3 station and a P4 station, and the transfer assembly 40 is intermittently rotated in a counterclockwise direction in Fig. 1.

As shown in Fig. 1, in the embodiments of the present disclosure, there are a plurality of stacking members 502, the mounting member 501 is rotatably disposed relative to the frame around a second axis, the plurality of stacking members 502 are arranged at intervals in a circumferential direction of the second axis, and each of the plurality of stacking members 502 is movably disposed in a direction perpendicular to the second axis.

In the above technical solution, there are a plurality of stacking members 502, after one stacking member 502 (e.g., a W1 station in Fig. 1) completes the manufacturing of a stacked battery cell structure, the mounting member 501 may be rotated, so that the manufactured stacked battery cell structure is away from the transfer assembly 40, so as to cut the stacked battery cell structure. Meanwhile, by rotating the mounting member 501, the next stacking member 502 (e.g., a W2 station in Fig. 1) may be disposed toward the transfer assembly 40, so as to perform stacking again. In this way, when the next stacking member 502 (e.g., the W2 station in Fig. 1) stacks the stacked battery cell structure, the stacked battery cell structure stacked on the previous stacking member 502 (e.g., the W1 station in Fig. 1) can be cut, thereby improving the stacking efficiency of the stacked battery cell structure.

Further, during the process of rotating the transfer assembly 40, the stacking member 502 movably disclosed in the direction perpendicular to the second axis may ensure that the composite electrode sheet strip 1 is always in a taut state, so as to avoid undesirable phenomena such as wrinkles of the composite electrode sheet strip 1, thereby achieving a better folding effect.

It should be noted that, in the embodiments of the present disclosure, the second axis passes through the center of the stacking assembly 50 to extend in the horizontal direction, and the second axis is perpendicular to the vertical direction in Fig. 1, that is, the second axis is perpendicular to the paper surface of Fig. 1, wherein the first axis and the second axis are disposed in parallel.

In the embodiments of the present disclosure, the mounting member 501 is a disk, and the direction perpendicular to the second axis is a radial direction of the disk.

It should be noted that, in the embodiments of the present disclosure, the number of stations of the stacking member 502 is greater than or equal to two, but the specific number is not limited, and the number of the adsorption stations 402 is consistent with the number of the stacking members 502.

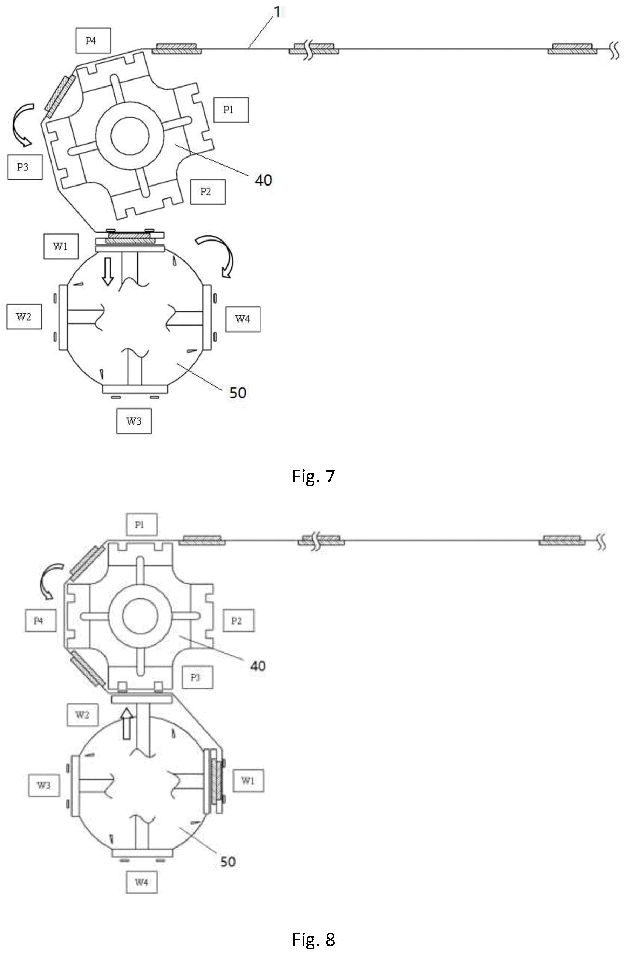

In the embodiments of the present disclosure, the number of the stacking members 502 is four, that is, the W1 station, the W2 station, a W3 station and a W4 station, and the stacking members 502 are intermittently rotated in a clockwise direction in Fig. 7.

As shown in Fig. 1, in the embodiments of the present disclosure, the stacking member 502 includes: a stacking platform, movably disposed on the mounting member 501; and a pressing member 504, located on the side of the stacking platform away from the mounting member 501, wherein the pressing member 504 is movably disposed on the stacking platform, and the pressing member 504 has a first position for pressing a part of the composite electrode sheet strip 1 on the stacking platform and a second position away from the stacking platform.

In the above technical solution, the pressing member 504 may press the composite electrode sheet strip 1 on the stacking platform, so as to fix the composite electrode sheet strip 1, so that during the process of rotating the transfer assembly 40, the composite electrode sheet strip 1 on the adsorption station 402 is stacked on the composite electrode sheet strip 1 that is pressed by the pressing piece 504, so as to form the stacked battery cell structure.

It should be noted that, as shown in Fig. 2, in the embodiments of the present disclosure, the pressing member 504 may move relative to the stacking platform in a direction where the second axis is located and the direction perpendicular to the second axis, so that the stacking platform moves to a position close to the transfer assembly 40; the pressing member 504 may be caused to first move along the second axis in a direction away from the stacking platform, so as to avoid the composite electrode sheet 1, the pressing member 504 is then caused to move in the vertical direction (i.e., the direction perpendicular to the second axis) in Fig. 2 toward the direction close to the transfer assembly 40, the pressing member 504 is then caused to move along the second axis toward the direction close to the stacking platform, so that the pressing member 504 is located on the side of the composite electrode sheet strip 1 away from the stacking platform, and finally the pressing member 504 is caused to move in the vertical direction (i.e., the direction perpendicular to the second axis) toward the direction close to the stacking platform, so as to press the composite electrode sheet strip 1 on the stacking platform; then, the stacking platform carries the separator 30 thereon to move away from the transfer assembly 40, and the transfer assembly 40 is rotated to fold the composite electrode sheet strip 1 on the compressed separator 30; and the pressing member 504 may be driven by a cylinder, and a specific structure may use a clamping jaw structure in the prior art, thus details are not described herein again.

As shown in Fig. 1, in the embodiments of the present disclosure, the stacking assembly 50 further includes a driving mechanism 503, the driving mechanism 503 has a fixed end and a movable end movably disposed relative to the fixed end, the fixed end is connected to the mounting member 501, and the movable end is connected to the stacking member 502.

In the above technical solution, by starting the driving mechanism 503, the movable end may drive the stacking member 502 to move in the direction perpendicular to the second axis, so that the stacking member 502 is close to or away from the adsorption station 402.

In the embodiments of the present disclosure, the driving mechanism 503 is an electric push rod or a cylinder.

As shown in Fig. 1, in the embodiments of the present disclosure, the transfer assembly 40 includes: a rotating member 401, rotatably disposed on the frame around the first axis; and a plurality of adsorption members, disposed on the rotating member 401 at intervals in the circumferential direction of the first axis, wherein an adsorption channel is disposed on each adsorption member, one end of the adsorption channel is configured to communicate with a vacuum gas source, and the other end of the adsorption channel penetrates to the side of the adsorption member away from the rotating member 401, so as to form the adsorption station 402 on the adsorption member.

In the above technical solution, by providing the vacuum gas source and the adsorption channel, the adsorption station 402 may be formed on the side of the adsorption member away from the rotating member 401, so as to adsorb the composite electrode sheet strip 1.

As shown in Fig. 1, in the embodiments of the present disclosure, the transfer assembly 40 further includes a gas guide slip ring 403, a rotating component of the gas guide slip ring 403 is connected to the rotating member 401, a stationary component of the gas guide slip ring 403 is connected to the frame, and the adsorption channels on the plurality of adsorption members communicate with the vacuum gas source through the gas guide slip ring 403. In this way, the gas guide slip ring 403 can communicate the stationary vacuum gas source with the adsorption channels on the rotating adsorption members, so as to avoid a twining phenomenon of pipelines for connecting the vacuum gas source and the adsorption members.

Specifically, in the embodiments of the present disclosure, the transfer assembly 40 further includes a rotating shaft rotatably disposed on the frame, the rotating member 401 is located on a periphery of the rotating shaft, the rotating shaft and the rotating member 401 rotate together relative to the frame, and the transfer assembly 40 further includes a vacuum pipeline 404; and the stationary component of the gas guide slip ring 403 is fixed on the frame, the stationary component is provided with a gas inlet end in communication with the gas source, the gas inlet end communicates with the vacuum gas source, the rotating component of the gas guide slip ring 403 is mounted on the periphery of the rotating shaft, the rotating component is rotatably disposed relative to the stationary component, the rotating component is provided with a gas outlet end, the gas outlet end communicates with the adsorption channel through the vacuum pipeline 404, a pipeline on the stationary component communicates with a pipeline on the rotating component, and the specific structure of the gas guide slip ring 403 may use the prior art, thus details are not described herein again.

As shown in Fig. 1, in the embodiments of the present disclosure, an avoidance groove 405 is formed in the side of the each adsorption member away from the rotating member 401, and the avoidance groove 405 is used for avoiding a part of the stacking member 502.

In the above technical solution, when the pressing member 504 moves along the second axis in the direction away from the stacking platform, the avoidance groove 405 may achieve the effect of avoiding the pressing member 504, so that the pressing member 504 can move to the side of the composite electrode sheet strip 1 away from the driving mechanism 503, thereby avoiding the interference between the pressing member 504 and the adsorption member.

As shown in Fig. 1, in the embodiments of the present disclosure, the stacking device further includes a cutting member 505 disposed on the mounting member 501, the cutting member 505 is located on a side of the at least one stacking member 502, and the cutting member 505 is used for cutting off the composite electrode sheet strip 1.

In the above technical solution, the cutting member 505 may cut off the composite electrode sheet strip 1, so that the stacked battery cell structures can be separated from each other. In this way, when the stacked battery cell structure on the W1 station is cut, a stacking work can be performed on the W2 station at the same time, thereby improving the working efficiency of stacking.

Specifically, in the embodiments of the present disclosure, the cutting member 505 includes a telescopic structure and a cutter, the telescopic structure has a fixed end and a movable end, the fixed end of the telescopic structure is fixed on the mounting member 501, the movable end of the telescopic structure is movably disposed relative to the fixed end of the telescopic structure, and the movable end of the telescopic structure is connected to the cutter.

In the embodiments of the present disclosure, the telescopic structure is a cylinder, and when the manufacturing of the stacked battery cell structure is completed on the W1 station, the cylinder is started to extend out the cutter, the separator 30 between the W1 station and the W2 station is cut off by using the cutter, and after the cutting is completed, the cutter is driven by the cylinder to reset.

Specifically, in the embodiments of the present disclosure, there are a plurality of cutting members 505, and the plurality of cutting members 505 are disposed corresponding to the plurality of stacking members 502, so that the stacked battery cell structures on the plurality of stacking members 502 can be cut respectively.

Specifically, in the embodiments of the present disclosure, the position of the each cutting member 505 is close to the corresponding stacking member 502, or the each cutting member 505 is directly mounted on a side edge of the corresponding stacking member 502.

As shown in Fig. 1, an embodiment of the present disclosure provides a preparation method of a stacked battery cell structure, in which a composite electrode sheet strip 1 is stacked by using the above stacking device. The preparation method of the stacked battery cell structure includes: adsorbing the composite electrode sheet strip 1 to the transfer assembly 40 by using at least part of the plurality of adsorption stations 402; and rotating the transfer assembly 40 and causing the stacking member 502 capable of clamping the composite electrode sheet strip 1 to reciprocate, so as to fold the composite electrode sheet strip 1 and to form the stacked battery cell structure.

In the above technical solution, a part of the composite electrode sheet strip 1 is adsorbed on the adsorption station 402, the transfer assembly 40 is rotated, when the transfer assembly 40 rotates to a position facing the stacking member 502, the transfer assembly 40 stops rotating, the stacking member 502 moves vertically upward to form a contact with the composite electrode sheet strip 1 and clamps the composite electrode sheet strip 1, the stacking member 502 then moves vertically downwards, and the transfer assembly 40 continues to rotate, so as to fold the composite electrode sheet strip 1 on the transfer assembly 40 and to place the same on the stacking member 502, thereby completing the working process of stacking. In this way, compared with the prior art in which the stacking platform is first moved to stack the separator and then transfer the positive and negative electrode sheets, or the composite units are first transferred and are then stacked on specified positions, in the present embodiment, transfer and stacking may be performed at the same time, so as to improve the stacking efficiency.

### Embodiment 1

As shown in Fig. 11, in Embodiment 1 of the present disclosure, the composite electrode sheet strip 1 includes: a separator 30; and a plurality of composite units, connected to the separator 30, wherein the plurality of composite units are disposed at intervals in a length direction of the separator 30, each composite unit includes a positive electrode sheet 10 and a negative electrode sheet 20, the positive electrode sheet 10 and the negative electrode sheet 20 are adhered to two sides of the separator 30 in a heating and pressurizing manner, and the number of the positive electrode sheets 10 is the same as the number of the negative electrode sheets 20.

Specifically, in Embodiment 1 of the present disclosure, the composite electrode sheet 1 in Embodiment 1 is folded in a Z-shape by using the stacking device, so as to form a stacked battery cell structure as shown in Fig. 10, the distance between the negative electrode sheet 20 and a head end of the separator 30 is S1, the overall width of the stacked battery cell structure is S2, the entire thickness of the stacked battery cell structure is S3, and the length of the tail end of the separator 30 coated on the stacked battery cell structure is S4.

As shown in Fig. 11, in Embodiment 1 of the present disclosure, the separator 30 in the composite electrode sheet strip 1 is a continuous strip, for a single stacked battery cell structure as shown in Fig. 10, the leftmost side of the composite electrode sheet strip 1 is the head end, the rightmost side of the composite electrode sheet strip 1 is the tail end, the distance between the first composite unit and the head end is T1, and T1 = S1 + S2; the distance between two adjacent composite units is T2, and T2 = 2×S1 + S2; the distance between the last composite unit and the tail end is T3, T3 = S1 + S2 + S3 + S4; and if the number of composite units in a single stacked battery cell structure is X, the length of the composite electrode sheet strip 1 is: K = T1 + (X-1)T2 + T3 + X × (the length of the negative electrode sheet) = T1 + (X-1)T2 + T3 + X×(S2-2 × S1) = (2X+1) × S2 + S3 + S4. In this way, the composite electrode sheet strip 1 can be conveniently folded into the stacked battery cell structure, wherein the influence of the thickness of a single positive electrode sheet 10 and the thickness of a single negative electrode sheet 20 on the distance is ignored in the embodiments of the present disclosure.

It should be noted that, in Embodiment 1 of the present disclosure, the specific number of the positive electrode sheets 10 and the specific number of the negative electrode sheets 20 are not limited.

As shown in Fig. 1, in Embodiment 1 of the present disclosure, in step 1 for manufacturing the stacked battery cell structure, a vacuum adsorption state is enabled on the P1 station to adsorb the separator 30 at the head end of the composite electrode sheet strip 1 on the surface thereof, and the rotating member 401 rotates in the counterclockwise direction to gradually pull the composite electrode sheet strip 1 into the transfer assembly 40. In order to reduce vacuum energy consumption loss, the P2 station, the P3 station and the P4 station are all in the vacuum breakdown state at this time.

As shown in Fig. 2, in Embodiment 1 of the present disclosure, the step 2 for manufacturing the stacked battery cell structure, the rotating member 401 continues to rotate in the counterclockwise direction and stops rotating when the P1 station moves to a position directly above the W1 station in the stacking assembly 50, at this time, the P1 station, the P2 station and the P3 station are all in the vacuum state, and the P4 station is in the vacuum breakdown state. The driving mechanism 503 on the W1 station drives the stacking member 502 to move upward in the vertical direction up to a position in contact with the separator 30, and when the cylinder drives the pressing member 504 to press the separator 30 on the stacking platform, the P1 station changes to the vacuum breakdown state, so that the separator 30 is disengaged from the adsorption station 402.

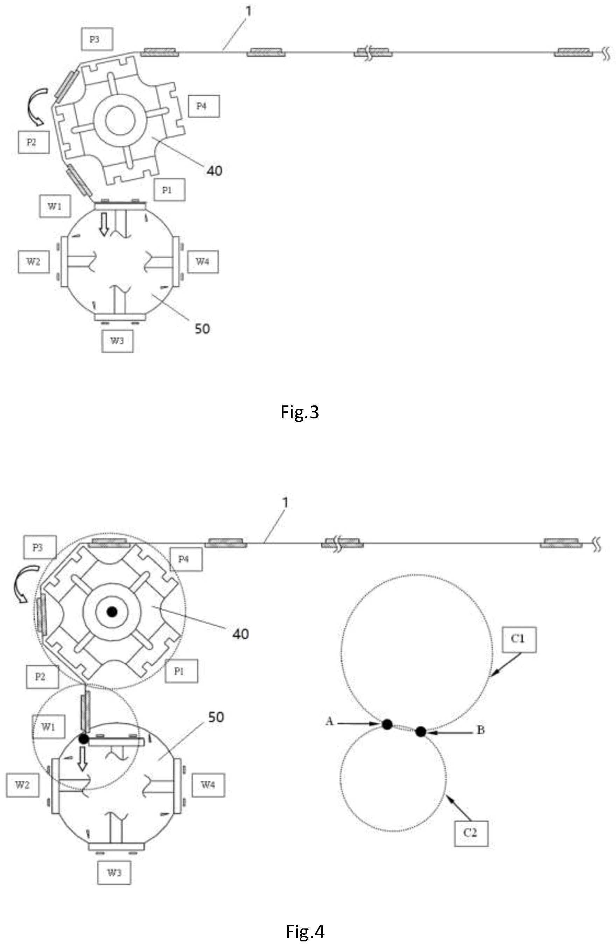

As shown in Fig. 3, in Embodiment 1 of the present disclosure, in step 3 for manufacturing the stacked battery cell structure, on the basis of Fig. 2, the driving mechanism 503 on the W1 station drives the stacking member 502 to move downward in the vertical direction, and at the same time, in order to maintain the tension stability of the composite electrode sheet strip 1 between the P1 station and the P2 station, the transfer assembly 40 starts to continue to rotate in the counterclockwise direction. At this time, both the P2 station and the P3 station are in the vacuum state, and the P1 station and the P4 station are in the vacuum breakdown state.

As shown in Fig. 4, in Embodiment 1 of the present disclosure, in step 4 for manufacturing the stacked battery cell structure, the transfer assembly 40 continues to rotate in the counterclockwise direction, at this time, the composite electrode sheet strip 1 presents a vertical state, if the stacking member 502 stops moving and the transfer assembly 40 continues to rotate counterclockwise at this time, a top end (the end located on the P2 station) of the composite electrode sheet strip 1 rotates with the center of the rotating member 401 as a rotation center, and then C1 is a motion trajectory of the top end (the end located on the P2 station) of the composite electrode sheet strip 1; the top end (the end located on the P2 station) of the composite electrode sheet strip 1 rotates with a tail end (the end located on the W1 station) of the composite electrode sheet strip as a rotation center, and C2 is a motion trajectory of the top end (the end located on the P2 station) of the composite electrode sheet strip 1. The two motion trajectories intersect at two points A and B, when the top end (the end located on the P2 station) of the composite electrode sheet strip 1 moves to a region between the two points A and B, the length of the composite electrode sheet strip is compressed, resulting in undesirable phenomena such as uneven wrinkles. Therefore, at this time, the driving mechanism 503 on the W1 station should drive the stacking member 502 to continue to move downward in the vertical direction and stop moving until the top end of the composite electrode sheet strip 1 passes through the point B. In this way, the composite electrode sheet strip 1 can always be in the taut state, thereby avoiding undesirable phenomena such as wrinkles in the composite electrode sheet strip 1, and thus achieving a better folding effect. At this time, the P2 station, the P3 station and the P4 station are all in the vacuum state, and the P1 station is in the vacuum breakdown state.

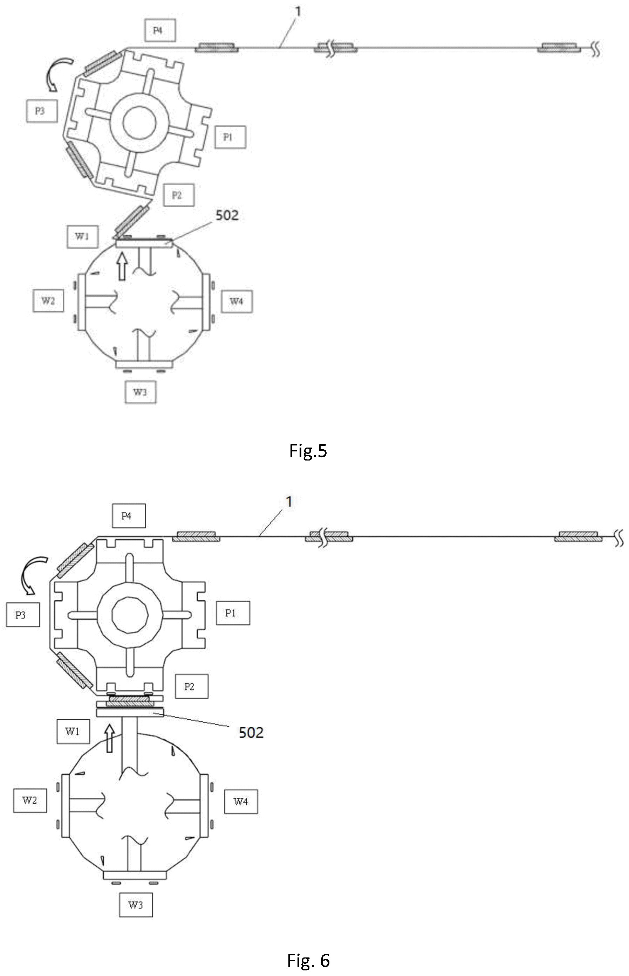

As shown in Fig. 5, in Embodiment 1 of the present disclosure, in step 5 for manufacturing the stacked battery cell structure, on the basis of Fig. 4, after the top end of the composite electrode sheet strip 1 passes through the point B, the driving mechanism 503 on the W1 station drives the stacking member 502 to start to move upward in the vertical direction, and at the same time, in order to keep the tension stability of the composite electrode sheet strip 1, the transfer assembly 40 continues to rotate counterclockwise. At this time, the P2 station, the P3 station and the P4 station are all in the vacuum state, and the P1 station is in the vacuum breakdown state.

As shown in Fig. 6, in Embodiment 1 of the present disclosure, in step 6 for manufacturing the stacked battery cell structure, the P2 station stops rotating when moving to a position directly above the W1 station in the stacking assembly 50, at this time, the P2 station, the P3 station and the P4 station are all in the vacuum state, and the P1 station is in the vacuum breakdown state. The driving mechanism 503 on the W1 station drives the stacking member 502 to move upward in the vertical direction until the folded composite electrode sheet strip 1 in Fig. 5 is in contact with the separator 30, and after the cylinder drives the pressing member 504 to press the separator 30 on a lower-layer composite unit, the P2 station changes into the vacuum breakdown state, so that the separator 30 is disengaged from the adsorption station 402.

As shown in Fig. 7, in Embodiment 1 of the present disclosure, in step 7 for manufacturing the stacked battery cell structure, after a specified number of stacking actions are completed, the pressing member 504 on the W1 station presses the separator 30 on the P2 station on the lower-layer composite unit, at this time, the driving mechanism 503 on the W1 station drives the stacking member 502 to move downward in the vertical direction, meanwhile, the transfer assembly 40 remains rotating counterclockwise, and the stacking assembly 50 rotates in the clockwise direction. The separator 30 adsorbed on the P3 station is the head end of the composite electrode sheet strip in the next period. Since the actual positions of the P1 station, the P2 station, the P3 station and the P4 station are related to the specific number of stacking, the positions of the stations shown in Fig. 7 are all schematic.

As shown in Fig. 8, in Embodiment 1 of the present disclosure, in step 8 for manufacturing the stacked battery cell structure, on the basis of Fig. 7, the stacking assembly 50 stops rotating after rotating by 90 degrees in the clockwise direction in Fig. 7, at the same time, the P3 station moves to a position directly above the W2 station in the stacking assembly 50 and stops rotating, at this time, the P1 station, the P3 station and the P4 station are all in the vacuum state, and the P2 station is in the vacuum breakdown state. The driving mechanism 503 on the W2 station drives the stacking member 502 to move upward in the vertical direction until the stacking member 502 is in contact with the separator 30, and after the cylinder drives the pressing member 504 to press the separator 30 on the stacking member 502, the P3 station changes to the vacuum breakdown state, so that the separator 30 is disengaged from the adsorption station 402. At this time, the cylinder drives the cutting member 505 to cut off the tail end of the separator 30 on the W1 station.

As shown in Fig. 9, in Embodiment 1 of the present disclosure, in step 9 for manufacturing the stacked battery cell structure, on the basis of Fig. 8, the completed stacked battery cell structure is taken out from the W1 station by using a discharging robotic arm, and the manufacturing of the stacked battery cell structure in the next period is continued on the W2 station. The discharging on the W1 station and the manufacturing of the stacked battery cell structure on the W2 station are independent of each other, and may be performed at the same time. Therefore, compared with the traditional solution in which a stacking machine first performs discharging and then manufactures the stacked battery cell structure, the manufacturing period can be reduced, and the manufacturing efficiency can be improved. The cut separator 30 at the tail end is then folded by subsequent procedures, so as to obtain the state of the stacked battery cell structure shown in Fig. 1.

### Embodiment 2

As shown in Fig. 12 to Fig. 14, Embodiment 2 of the present disclosure differs from Embodiment 1 in that the last composite unit among the plurality of composite units only includes the negative electrode sheet 20, and the remaining composite units among the plurality of composite units include the positive electrode sheets 10 and the negative electrode sheets 20. That is, the plurality of composite units (the composite units include the positive electrode sheets 10 and the negative electrode sheets 20, and the positive electrode sheets 10 and the negative electrode sheets 20 are compounded on two sides of one separator) are folded in Embodiment 1, and the plurality of composite units (the composite units include the positive electrode sheets 10 and the negative electrode sheets 20, and the positive electrode sheets 10 and the negative electrode sheets 20 are compounded on two sides of one separator) and one negative electrode sheet 20 (the negative electrode sheet 20 is compounded on one side of one separator) are folded in Embodiment 2, therefore the number of the negative electrode sheets 20 = the number of the positive electrode sheets 10 + 1.

As shown in Fig. 13, in Embodiment 2 of the present disclosure, the composite electrode sheet strip 1 in Embodiment 2 is folded in the Z-shape by using the stacking device, so as to form a stacked battery cell structure as shown in Fig. 13, the distance between the negative electrode sheet 20 and the head end of the separator 30 is S1, and the overall width of the stacked battery cell structure is S2.

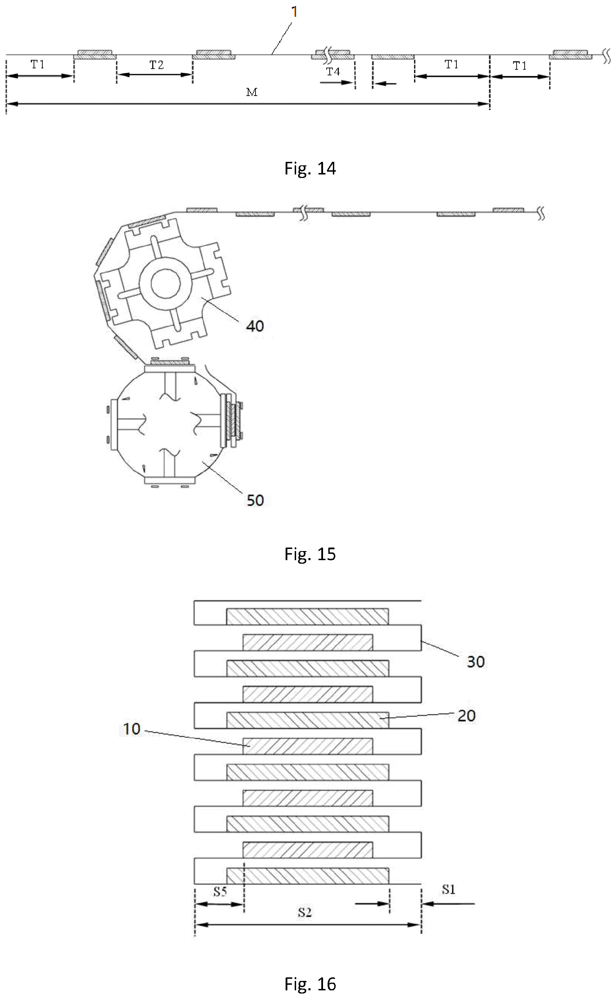

Specifically, in Embodiment 2 of the present disclosure, as shown in Fig. 14, the separator 30 in the composite electrode sheet strip is a continuous strip, for a single stacked battery cell structure as shown in Fig. 14, the leftmost side of the composite electrode sheet strip 1 is the head end, the rightmost side of the composite electrode sheet strip 1 is the tail end, the distance between the first composite unit and the head end is T1; the distance between two adjacent composite units is T2; the distance between the last negative electrode composite unit (the negative electrode sheet) and a composite unit adjacent thereto is T4, and T4 = 2 × S1; the distance between the last negative electrode composite unit and the tail end of the separator is T1; and if the number of composite units (including the positive electrode sheets 10 and the negative electrode sheets 20) in a single stacked battery cell structure is X, the length of the composite electrode sheet strip 1 is: M = T1 + (X-1) × T2 + X × (the length of the negative electrode sheet 20) + T4 + (the length of the negative electrode sheet) + T1 = T1 + (X-1) × T2 + X × (S2-2 × S1) + T4 + (S2-2 × S1) + T1 = (2X+2) × S2, wherein the influence of the thickness of a single positive electrode sheet 10 and the thickness of a single negative electrode sheet 20 on the distance is ignored.

Other structures of Embodiment 2 of the present disclosure are the same as those of Embodiment 1, and thus details are not described herein again.

### Embodiment 3

As shown in Fig. 15 to Fig. 17, Embodiment 3 of the present disclosure differs from Embodiment 1 in that each composite unit only includes the positive electrode sheet 10 or the negative electrode sheet 20, and the polarities of two adjacent composite units are opposite, a plurality of positive electrode sheets 10 are compounded on one side of the separator 30, a plurality of negative electrode sheets 20 are compounded on the other side of the separator 30, and the number of the negative electrode sheets = the number of the positive electrode sheets +1.

As shown in Fig. 16, in Embodiment 3 of the present disclosure, the composite electrode sheet strip 1 in Embodiment 3 is folded in the Z-shape by using the stacking device, so as to form a stacked battery cell structure as shown in Fig. 16, the distance between the negative electrode sheet 20 and the head end of the separator 30 is S1, the overall width of the stacked battery cell structure is S2, and the distance between the positive electrode sheet 10 and the edge of the separator 30 is S5.

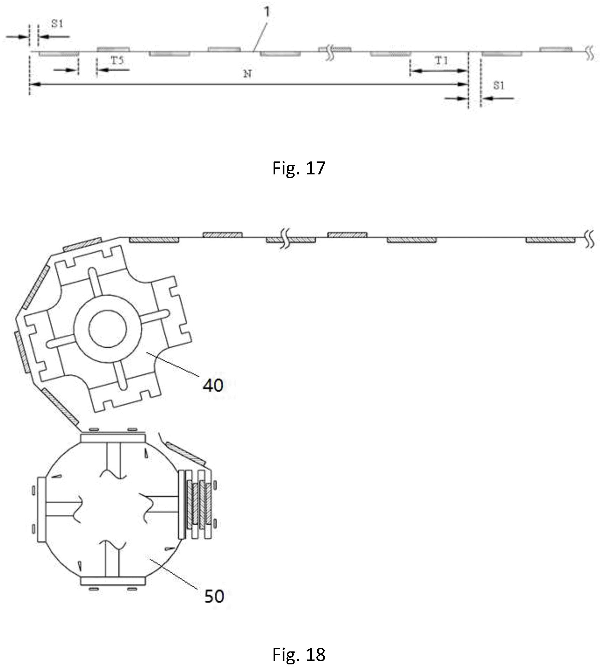

Specifically, in Embodiment 3 of the present disclosure, as shown in Fig. 17, the separator 30 in the composite electrode sheet strip is a continuous strip, for the stacked battery cell structure as shown in Fig. 17, the leftmost side of the composite electrode sheet strip 1 is the head end, the rightmost side of the composite electrode sheet strip 1 is the tail end, and the distance between the first composite unit and the head end is S1; the distance between two adjacent composite units is T5, and T5 = S1 + S5; the distance between the last composite unit and the tail end of the separator is T1; and if the number of negative electrode sheets in a single stacked battery cell structure is X, the length of the composite electrode sheet strip is: N = S1 + X × (the length of the negative electrode sheet) + T5 × (2X-2) + (X-1) × (the length of the positive electrode sheet) + T1 = S1 + X × (S2-2 × S1) + (S1 + S5) × (2X-2) + (X-1) × (S2-2 × S5) + S1 + S2 = 2X × S2, wherein the influence of the thickness of a single positive electrode sheet 10 and the thickness of a single negative electrode sheet 20 on the distance is ignored.

Other structures of Embodiment 3 of the present disclosure are the same as those of Embodiment 1, and thus details are not described herein again.

### Embodiment 4

As shown in Fig. 18 to Fig. 20, Embodiment 4 of the present disclosure differs from Embodiment 3 in that a starting end in Embodiment 4 is the separator 30, and a starting end in Embodiment 3 is a negative electrode sheet.

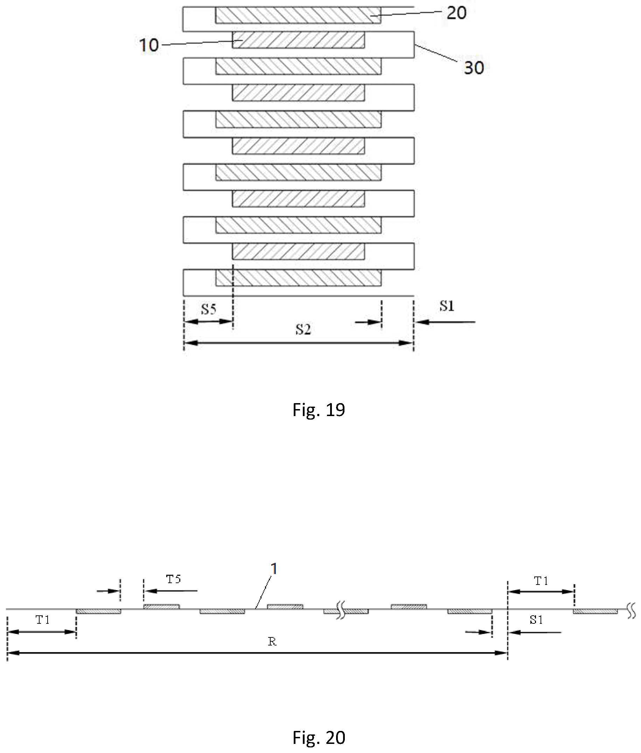

As shown in Fig. 19, in Embodiment 4 of the present disclosure, the composite electrode sheet strip 1 in Embodiment 4 is folded in the Z-shape by using the stacking device, so as to form a stacked battery cell structure as shown in Fig. 19. As shown in Fig. 20, the separator 30 in the composite electrode sheet strip 1 is a continuous strip, the leftmost side of the composite electrode sheet strip 1 is the head end, the rightmost side of the composite electrode sheet strip 1 is the tail end, and the distance between the first composite unit and the head end is T1; the distance between two adjacent composite units is T5; and the distance between the last composite unit and the tail end of the separator is S1.

Specifically, in Embodiment 4 of the present disclosure, if the number of negative electrode sheets in a single stacked battery cell structure is X, the length of the composite electrode sheet strip 1 is: R = T1 + X × (the length of the negative electrode sheet) + T5 × (2X-2) + (X-1) × (the length of the positive electrode sheet) + S1 = S1 + S2 + X × (S2-2 × S1) + (S1 + S5) × (2X-2) + (X-1) × (S2-2 × S5) + S1 = 2X× S2, wherein the influence of the thickness of a single positive electrode sheet 10 and the thickness of a single negative electrode sheet 20 on the distance is ignored.

It should be noted that the stacking device in the embodiments of the present disclosure is applicable to the composite electrode sheet strip and the stacked battery cell structure in the above four embodiments.

Other structures of Embodiment 4 of the present disclosure are the same as those of Embodiment 3, and thus details are not described herein again.

From the above description, it can be seen that, the adsorption stations are located in the vacuum state, so that the composite electrode sheet strip can be adsorbed on the periphery of the transfer assembly, and the transfer assembly is rotated, so that the adsorption stations carrying the composite electrode sheet strip face the stacking member, thereby realizing the transfer of composite units on the composite electrode sheet strip; the stacking member is then caused to move toward the direction close to the transfer assembly, so that the stacking member can contact the composite electrode sheet strip and clamp and fix the end part of the composite electrode sheet strip, and then the stacking member is caused to carry the composite electrode sheet strip to move toward the direction away from the transfer assembly; the transfer assembly is rotated to drive the composite electrode sheet strip on the adsorption stations to be transferred to a position corresponding to the stacking member through the transfer assembly; and then, the transfer assembly is rotated, and the stacking member is caused to move toward the direction close to the transfer assembly, so that the composite electrode sheet strip corresponding to the stacking member is stacked on the stacking member. In this way, compared with the solution in the prior art in which the stacking platform is first moved to stack the separator and then transfer the positive and negative electrode sheets, or the composite units are first transferred and are then stacked on specified positions, in the present embodiment, the composite units on the composite electrode sheet strip can be transferred and stacked on the stacking member during the process of rotating the transfer assembly. In this way, the stacking efficiency can be improved by performing the steps of transfer and stacking at the same time, thereby solving the problem in the prior art of difficulty in effectively improving the stacking efficiency, and thus shortening the manufacturing period of stacking.

Obviously, the embodiments described above are only a part of the embodiments of the present disclosure, rather than all of the embodiments. All other embodiments, obtained by those of ordinary skill in the art based on the embodiments in the present disclosure without creative efforts, shall fall within the protection scope of the present disclosure.

It should be noted that the terms used herein are for the purpose of describing particular implementations only and are not intended to limit exemplary implementations according to the present application. As used herein, a singular form is intended to include a plural form as well, unless the context clearly indicates otherwise. In addition, it should also be understood that the terms "include" and/or "contain," when used in the present specification, specify the presence of features, steps, works, devices, components and/or combinations thereof.

The foregoing descriptions are merely preferred embodiments of the present disclosure, and are not intended to limit the present disclosure. For those skilled in the art, the present disclosure may have various modifications and changes. Any modifications, equivalent replacements, improvements, and the like, made within the spirit and principles of the present disclosure, shall fall within the protection scope of the present disclosure.

## Claims

1. A stacking device, used for stacking a composite electrode sheet strip (1), and comprising:
a frame;
a transfer assembly (40), rotatably disposed on the frame around a first axis, wherein the transfer assembly (40) has a plurality of adsorption stations (402), the plurality of adsorption stations (402) are arranged in a circumferential direction of the first axis, and each of the plurality of adsorption stations (402) has a vacuum state for adsorbing the composite electrode sheet strip (1) and a vacuum breakdown state for releasing the composite electrode sheet strip (1); and
a stacking assembly (50), located on a side of the transfer assembly (40), wherein the stacking assembly (50) comprises a mounting member (501) and at least one stacking member (502), the mounting member (501) is disposed on the frame, the at least one stacking member (502) is configured to be capable of clamping the composite electrode sheet strip (1), and the at least one stacking member (502) is movably mounted on the mounting member (501), so that the at least one stacking member (502) is able to get close to or away from the transfer assembly (40).

2. The stacking device according to claim 1, wherein the at least one stacking member (502) comprises a plurality of stacking members, the mounting member (501) is rotatably disposed relative to the frame around a second axis, the plurality of stacking members (502) are arranged at intervals in a circumferential direction of the second axis, and each of the plurality of stacking members (502) is movably disposed in a direction perpendicular to the second axis.

3. The stacking device according to claim 1, wherein each of the at least one stacking member (502) comprises:
a stacking platform, movably disposed on the mounting member (501); and
a pressing member (504), located on a side of the stacking platform away from the mounting member (501), wherein the pressing member (504) is movably disposed on the stacking platform, and the pressing member (504) has a first position for pressing a part of the composite electrode sheet strip (1) on the stacking platform and a second position away from the stacking platform.

4. The stacking device according to claim 1, wherein the stacking assembly (50) further comprises a driving mechanism (503), the driving mechanism (503) has a fixed end and a movable end movably disposed relative to the fixed end, the fixed end is connected to the mounting member (501), and the movable end is connected to the at least one stacking member (502).

5. The stacking device according to any one of claims 1 to 4, wherein the transfer assembly (40) comprises:
a rotating member (401), rotatably disposed on the frame around the first axis; and
a plurality of adsorption members, disposed on the rotating member (401) at intervals in the circumferential direction of the first axis, the plurality of adsorption members are arranged in correspondence with the plurality of adsorption stations (402); wherein an adsorption channel is disposed on each of the plurality of adsorption members, one end of the adsorption channel is configured to communicate with a vacuum gas source, and the other end of the adsorption channel penetrates to a side of a corresponding adsorption member away from the rotating member (401), so as to form a corresponding adsorption station (402) on the corresponding adsorption member.

6. The stacking device according to claim 5, wherein the transfer assembly (40) further comprises a gas guide slip ring (403), a rotating component of the gas guide slip ring (403) is connected to the rotating member (401), a stationary component of the gas guide slip ring (403) is connected to the frame, and adsorption channels on the plurality of adsorption members communicate with the vacuum gas source through the gas guide slip ring (403).

7. The stacking device according to claim 5, wherein an avoidance groove (405) is formed in a side of each of the plurality of adsorption members away from the rotating member (401), and the avoidance groove (405) is used for avoiding a part of the at least one stacking member (502).

8. The stacking device according to any one of claims 1 to 4, wherein the stacking device further comprises a cutting member (505) disposed on the mounting member (501), the cutting member (505) is located on a side of the at least one stacking member (502), and the cutting member (505) is used for cutting off the composite electrode sheet strip (1).

9. A stacked battery cell structure, formed by continuously folding a composite electrode sheet strip (1) by using the stacking device according to any one of claims 1 to 8, wherein the composite electrode sheet strip (1) comprises:
a separator (30); and
a plurality of composite units, connected to the separator (30), wherein the plurality of composite units are disposed at intervals in a length direction of the separator (30), each of the plurality of composite units comprises a positive electrode sheet (10) and/or a negative electrode sheet (20), one of two adjacent composite units at least comprises the negative electrode sheet (20), and the other of the two adjacent composite units at least comprises the positive electrode sheet (10), and the positive electrode sheet (10) and the negative electrode sheet (20) are respectively located on two sides of the separator (30).

10. A preparation method of a stacked battery cell structure, in which a composite electrode sheet strip (1) is stacked by using the stacking device according to any one of claims 1 to 8, wherein the preparation method of the stacked battery cell structure comprises:
adsorbing the composite electrode sheet strip (1) to the transfer assembly (40) by using at least part of the plurality of adsorption stations (402); and
rotating the transfer assembly (40) and causing the at least one stacking member (502) capable of clamping the composite electrode sheet strip (1) to reciprocate, so as to fold the composite electrode sheet strip (1) and to form the stacked battery cell structure.
